# EUROPEAN PATENT APPLICATION

(11) **EP 2 103 965 A1**
(43) Date of publication of application: **23.09.2009**
(21) Application number: 07860244.8
(22) Date of filing: 26.12.2007
(51) Int. Cl.: G02B 1/11, B32B 9/00, G09F 9/00

(54) **ANTI-REFLECTION PRODUCT AND DISPLAY DEVICE**

(30) Priority: 27.12.2006 JP 2006350752
(71) Applicant: Asahi Glass Company, Limited, Chiyoda-ku Tokyo 100-8405 (JP)
(72) Inventor: MORIMOTO, Tamotsu, Tokyo 100-8405 (JP); TOMIDA, Michihisa, Tokyo 100-8405 (JP)
(74) Representative: Müller-Boré & Partner Patentanwälte
(86) International application number: PCT/JP2007/075015
(87) International publication number: WO 2008/081837

(57) **Abstract**

There are provided an antireflector having a simple layer structure, a high visible light transmittance, a low visible light reflectance and an excellent anti-fingerprint property, and a display device having an excellent viewability.

An antireflector 1 including a substrate 10 and an antireflection film 20; the antireflection film 20 having a first high refractive index layer 22, a metal layer 24, a second high refractive index layer 26 and a low refractive index layer 28 disposed therein sequentially from a substrate side facing the substrate 1; the first high refractive index layer containing at least one member selected from the group consisting of tin, gallium and cerium in the form of an oxide, and indium in the form of an oxide; the metal layer containing silver and palladium and having a palladium content of from 3 to 20 mass% relative to the total amount of the metal layer (100 mass%); the second high refractive index layer containing at least one member selected from the group consisting of tin, gallium and cerium in the form of an oxide and indium in the form of an oxide. A display device including the antireflector 1 disposed on an observer' side of a display panel.

## Description

### TECHNICAL FIELD

The present invention relates to an antireflector and a display device.

### BACKGROUND ART

An antireflector has been disposed on the observer's side of a display panel in order to improve the viewability of the display device. It has been known that the antireflector includes a substrate and an antireflection film wherein the antireflection film has a transparent dielectric layer having a low refractive index, a transparent dielectric layer having a high refractive index and a transparent conductive layer having a low refractive index sequentially disposed from a substrate side therein (Patent Document 1). However, in this anti reflector, it is necessary to increase the number of the layers forming the antireflection film in order to secure a wide low reflection wavelength region. This causes a problem of increasing the production cost.

As an antireflector having a simple layer structure, it has been proposed that the antireflector includes a substrate and an antireflection film wherein the antireflection film has a light absorbing layer and a silica layer sequentially disposed from a substrate side therein (Patent Document 2). However, this proposal causes a problem of having a low visible light transmittance since the antireflector includes the light absorbing layer.

As an antireflector having a simple layer structure and a high visible light transmittance, it has been proposed that the antireflector includes a substrate and an antireflection film wherein the antireflection film has a high refractive index layer, a silver layer, a barrier layer and a low refractive index layer disposed sequentially disposed from a substrate side therein (Patent Document 3). However, this antireflector has a problem of being likely to have a fingerprint affixed on the antireflection film when the fingerprint is left for a long period of time after having adhered to the antireflection film.
Patent Document 1: JP-A-60-168102
Patent Document 2: JP-A-9-156964
Patent Document 3: JP-A-2001-324601

### DISCLOSURE OF THE INVENTION

### OBJECT TO BE ACCOMPLISHED BY THE INVENTION

It is an object of the present invention to provide an antireflector having a simple layer structure, a high visible light transmittance, a low visible light reflectance and an excellent anti-fingerprint property, and a display device having an excellent viewability.

### MEANS OF SOLVING THE PROBLEM

The antireflector according to the present invention is characterized to include a substrate and an antireflection film, wherein the antireflection film has a first high refractive index layer, a metal layer, a second high refractive index layer and a low refractive index layer disposed sequentially from a substrate side therein, the first high refractive index layer containing at least one member selected from a group consisting of tin, gallium and cerium in the form of an oxide and indium in the form of an oxide, and having a refractive index of from 1.8 to 2.5; the metal layer containing silver and palladium, having a silver content of from 80 to 97 mass% relative to the total amount of the metal layer (100 mass%) and having a palladium content of from 3 to 20 mass% relative to the total amount of the metal layer (100 mass%), the second high refractive index layer containing at least one member selected from a group consisting of tin, gallium and cerium in the form of an oxide and indium in the form of an oxide, and having a refractive index of from 1.8 to 2.5; and the low refractive index layer having a refractive index of from 1.3 to 1.6.

The display device according to the present invention is characterized to include a display panel for displaying an image and the antireflector according to the present invention disposed on the observer' side of the display panel.

### EFFECTS OF THE INVENTION

The antireflector according to the present invention has a simple layer structure, a high visible light transmittance, a low visible light reflectance and an excellent anti-fingerprint property.

The display device according to the present invention has an excellent viewability.

### BRIEF DESCRIPTION OF DRAWINGS

Fig. 1 is a cross-sectional view showing a typical example of the antireflector according to the present invention;
Fig. 2 is a graph showing the spectral reflectance of the antireflector in Example 5; and
Fig. 3 is a graph showing the spectral transmittance of the antireflector in Example 5.

### EXPLANATION OF NUMERICAL REFERENCE

- 1: Antireflector
- 10: Substrate
- 20: Antireflection film
- 22: First high refractive index layer
- 24: Metal layer
- 26: Second high refractive index layer
- 28: Low refractive index layer

### BEST MODE FOR CARRYING OUT THE INVENTION

### Antireflector

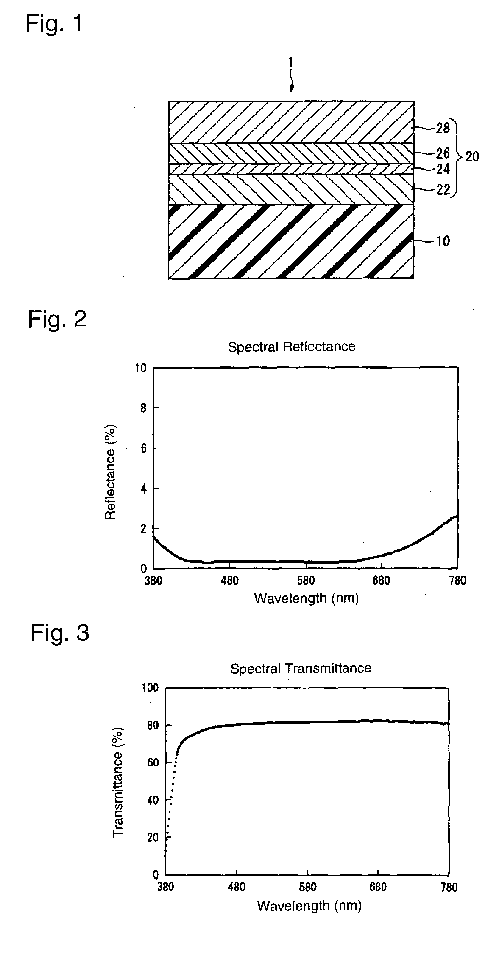

Fig. 1 is a cross-sectional view showing a typical example of the antireflector according to the present invention. The antireflector includes a substrate 10 and an antireflection film 20 disposed on the substrate 10.

### Substrate

Examples of the substrate include a glass sheet and a sheet or film made of a plastic material. Examples of the plastic material include polyethylene terephthalate, polycarbonate, triacetyl cellulose, polyether sulfone and polymethylmethacrylate.

### Antireflection Film

The antireflection film 20 has a first high refractive index layer 22, a metal layer 24, a second high refractive index layer 26 and a low refractive index layer 28 disposed therein sequentially from a side facing the substrate 10.

### High Refractive Index Layers

Each of the first high refractive index layer 22 and the second high refractive index layer 26 has a refractive index of from 1.8 to 2.5, preferably from 1.9 to 2.3 and more preferably from 1.9 to 2.2. When each of the first and second high refractive index layers has a refractive index in one of these ranges, it is possible to obtain a low reflectance in a wide wavelength region of from 450 nm to 700 nm.

The refractive index means a refractive index with respect to light having a wavelength of 550 nm.

Each of the first high refractive index layer 22 and the second high refractive index layer 26 contains at least one member selected from a group consisting of tin, gallium and cerium in the form of an oxide, and indium in the form of an oxide.

Hereinbelow, a high refractive index layer containing indium and tin in the form of oxides will be referred to as an ITO layer, such a layer containing indium, tin and gallium in the form of oxides will be referred to as a GIT layer, a high refractive index layer containing indium and cerium in the form of oxides will be referred to as an ICO layer, and a high refractive index layer containing indium and gallium in the form of oxides will be referred to as an GIO layer.

### ITO Layer

In the ITO layer, it is estimated that indium and tin exist in the form of a mixture containing an indium oxide, a tin oxide and a composite oxide thereof. The contents of the indium atoms and the tin atoms in the ITO layer may be measured by an electron probe microanalyzer, an ESCA method (X-ray photoelectron spectroscopy) or a Rutherford back scattering method. When this layer is deposited by sputtering, the contents may be found based on the composition of the target used for sputtering since the layer is formed as a layer having substantially the same composition as the used target.

The content of the indium atoms in the ITO layer is preferably from 33 to 75 mass%, more preferably from 33 to 68 mass% and further preferably from 41 to 58 mass% relative to the total amount of the ITO layer (100 mass%). When the content of the indium atoms in the ITO layer is in one of these ranges, it is possible to obtain an excellent anti-fingerprint property.

The content of the tin atoms in the ITO is preferably from 7 to 48 mass% [3.2 to 21.1 atomic%], more preferably from 14 to 48 mass% [6.5 to 21.1 atomic%] and further preferably from 23 to 40 mass% [10.4 to 17.8 atomic%] relative to the total amount of the ITO layer (100 mass%). It should be noted that the values in the brackets of "[ ]" show the contents of the tin atoms converted based on the number of atoms. When the content of the tin atoms is set at 7 mass% or more, it is possible to obtain an excellent anti-fingerprint property. When the content of the tin atoms is set at 14 mass% or more, or 23 mass% or more, it is possible to obtain a more excellent anti-fingerprint property. The content of the tin atoms is preferably 48 mass% or less since it is expected that the ITO layer is stably deposited as a homogenous film. When the content of the tin atoms is in one of these ranges, it is possible to achieve an excellent anti-fingerprint property since it is estimated that the content of the tin atoms is associated with the anti-fingerprint property in the ITO layer.

The ITO layer may contain an oxide of other metal except for indium and tin to an extent that prevents the required physical property from being adversely affected. Examples of the other metal include gallium and titanium. The content of the atoms of such other metal is preferably 1 mass% or less relative to all metal atoms contained in the ITO layer (100 mass%).

### GIT Layer

In the GIT layer, it is estimated that indium, tin and gallium exist in the form of a mixture containing an indium oxide, a tin oxide, a gallium oxide and a composite oxide thereof. The contents of the indium atoms, the tin atoms and the gallium atoms in the GIT layer may be measured by an electron probe microanalyzer, an ESCA method or a Rutherford backscattering method. When this layer is deposited by sputtering, the contents may be found based on the composition of the target used for sputtering since the layer is formed in substantially the same composition as the used target.

The content of the indium atoms in the GIT layer is preferably from 2 to 12 mass% and more preferably from 2 to 9 mass% relative to the total amount of the GIT layer (100 mass%).

The content of the tin atoms in the GIT layer is preferably from 63 to 77 mass% and more preferably from 67 to 76 mass% relative to the total amount of the GIT layer (100 mass%). The content of the tin atoms is preferred in one of these ranges since it is expected that the GIT layer is stably deposited as a homogeneous film.

The content of the gallium atoms in the GIT layer is preferably from 1 to 4 mass% and more preferably from 1 to 3 mass% relative to the total amount of the GIT layer (100 mass%). The content of the gallium atoms is preferred in one of these ranges since it is expected that the GIT layer is stably deposited as a homogeneous film.

The GIT layer may contain an oxide of other metal except for indium, tin and gallium to an extent that prevents the required physical property convened adversely affected. Examples of the other metal include titanium, aluminum, magnesium and silicon. The content of the atoms of such other metal is preferably 1 mass% or less relative to all metal atoms contained in the GIT layer (100 mass%).

### ICO Layer

In the ICO layer, it is estimated that indium and cerium exist in the form of a mixture containing an indium oxide, a cerium oxide and a composite oxide thereof. The contents of the indium atoms and the cerium atoms in the ICO layer may be measured by an electron probe microanalyzer, an ESCA method or a Rutherford backscattering method. When this layer is deposited by sputtering, the contents may be found based on the composition of the target used for sputtering since the layer is formed in substantially the same composition as the used target.

The content of the indium atoms in the ICO layer is preferably from 29 to 75 mass%, more preferably from 29 to 67 mass% and further preferably from 38 to 57 mass% relative to the total amount of the ICO layer (100 mass%).

The content of the cerium atoms in the ICO layer is preferably from 8 to 52.1 mass% [3.2 to 21.1 atomic%], more preferably from 16 to 52.1 mass% [6.5 to 21.1 atomic%] and further preferably from 26 to 44 mass% [10.4 to 17.8 atomic%] relative to the total amount of the ICO layer (100 mass%). It should be noted that the values in the brackets of "[ ]" show the contents of the cerium atoms converted based on the number of atoms. When the content of the cerium atoms is set at 8 mass% or more, it is possible to obtain an excellent anti-fingerprint property. When the content of the cerium atoms is set at 16 mass% or more, or 26 mass% or more, it is possible to obtain a more excellent anti-fingerprint property. It is estimated that the content of the cerium atoms is associated with the anti-fingerprint property in the ICO layer. In other words, it is estimated that the cerium atoms have a similar effect to the tin atoms in the ITO layer. When the content of the cerium atoms in the ICO layer is the same as the content of the tin atoms in the ITO layer on the basis of the number of atoms, it is possible to achieve an excellent anti-fingerprint property as in the ITO layer. When the content of the cerium atoms is set at 52.1 mass% or less, it is possible to keep the substrate temperature at a low level even if the sputtering rate is set at a high level. This means that when the substrate is formed of a plastic material, it is possible to prevent the substrate from being adversely affected by heat during sputtering.

The ICO layer may contain an oxide of other metal except for indium and cerium to an extent that prevents the required physical property from being adversely affected. Examples of the other metal include titanium, aluminum, magnesium and silicon. The content of the atoms of such other metal is preferably 1 mass% or less relative to all metal atoms contained in the ICO layer (100 mass%).

### GIO Layer

In the GIO layer, it is estimated that gallium and indium exist in the form of a mixture containing a gallium oxide, an indium oxide and a composite oxide thereof. The contents of the indium atoms and the gallium atoms in the GIO layer may be measured by an electron probe microanalyzer, an ESCA method or a Rutherford backscattering method. When this layer is deposited by scattering, the contents may be found based on the composition of the target used for sputtering since the layer is formed as a layer having substantially the same composition as the used target.

The content of the indium atoms in the GIO layer is preferably from 33 to 50 mass% and more preferably from 37 to 46 mass% relative to the total amount of the GIO layer (100 mass%).

The content of the gallium atoms in the GIO layer is preferably from 30 to 45 mass% and more preferably from 34 to 41 mass% relative to the total amount of the GIO layer (100 mass%).

The GIO layer may contain an oxide of other metal except for indium and gallium to an extent that prevents the required physical property from being adversely affected. Examples of the other metal include titanium, aluminum, magnesium and silicon. The content of the atoms of such other metal is preferably 1 mass% or less relative to all metal atoms contained in the GIO layer (100 mass%).

The first, high refractive index layer and the second high refractive index layer may be the same as or different from each other in terms of material and composition. It is preferred that the first high refractive index layer and the second high refractive index layer be formed of the same material and have the same composition. When the first high refractive index layer and the second high refractive index layer are formed of the same material and have the same composition, this mode has several advantages, such as simplification of the apparatus during production of the antireflector according to the present invention and simplification of the production process.

When the first high refractive index layer 22 is formed of an ITO layer, the first high refractive index layer 22 has a film thickness of preferably from 20 to 40 nm and more preferably from 25 to 35 nm. When the film thickness is set in one of these ranges, it is possible to obtain a low reflectance in a wide wavelength region of from 450 nm to 700 nm.

When the first high refractive index layer 22 is formed of a GIT layer, the first high refractive index layer 22 has a film thickness of preferably from 20 to 40 nm and more preferably from 25 to 35 nm. When the film thickness is set in one of these ranges, it is possible to obtain a low reflectance in a wide wavelength region of from 450 nm to 700 nm.

When the first high refractive index layer 22 is formed of an ICO layer, the first high refractive index layer 22 has a film thickness of preferably from 15 to 35 nm and more preferably from 20 to 30 nm. When the film thickness is set in one of these ranges, it is possible to obtain a low reflectance in a wide wavelength region of from 450 nm to 700 nm.

When the first refractive index layer 22 is formed of a GIO layer, the first refractive index layer 22 has a film thickness of preferably from 20 to 40 nm and more preferably from 20 to 30 nm. When the film thickness is set in one of these ranges, it is possible to obtain a low reflectance in a wide wavelength region of from 450 nm to 700 nm.

When the second high refractive index layer 26 is formed of an ITO layer, the second high refractive index layer 26 has a film thickness of preferably from 12 to 30 nm and more preferably from 15 to 25 nm. When the film thickness is set in one of these ranges, it is possible to obtain a low reflectance in a wide wavelength region of from 450 nm to 700 nm.

When the second high refractive index layer 26 is formed of a GIT layer, the second high refractive index layer 26 has a film thickness of preferably from 12 to 30 nm and more preferably from 15 to 25 nm. When the film thickness is set in one of these ranges, it is possible to obtain a low reflectance in a wide wavelength region of from 450 nm to 700 nm.

When the second high refractive index layer 26 is formed of an ICO layer, the second high refractive index layer 26 has a film thickness of preferably from 8 to 25 nm and more preferably from 10 to 20 nm. When the film thickness is set in one of these ranges, it is possible to obtain a low reflectance in a wide wavelength region of from 450 nm to 700 nm.

When the second high refractive index layer 26 is formed of a GIO layer, the second high refractive index layer 26 has a film thickness of preferably from 12 to 30 nm and more preferably from 15 to 25 nm. When the film thickness is set in one of these ranges, it is possible to obtain a low reflectance in a wide wavelength region of from 450 nm to 700 nm.

The film thickness may be found by successively scanning a portion with film deposition and a portion without film deposition and measuring the difference in height between both portions by use of a feeler type surface roughness meter.

### Metal Layer

The metal layer 24 is formed of a layer containing silver and palladium.

The content of silver is from 80 to 97 mass%, preferably from 90 to 97 mass% and more preferably from 90 to 95 mass% relative to the total amount of the metal layer 24 (100 mass%). When the content of silver is set at one of the upper limits or less, it is possible to obtain an excellent anti-fingerprint property. When the content of silver is set at one of the lower limits or more, it is possible to obtain a high visible light transmittance.

The content of palladium is from 3 to 20 mass%, preferably from 3 to 10 mass% and more preferably from 5 to 10 mass% relative to the total amount of the metal layer 24 (100 mass%). When the content of palladium is set at 3 mass% or more, the obtained antireflector is excellent in anti-fingerprint property. When the content of palladium is set at 20 mass% or less, it is possible to increase the visible light transmittance of the antireflector.

The contents of silver and palladium in the metal layer 24 may be measured by an electron probe microanalyzer, an ESCA method or a Rutherford backscattering method.

The metal layer may contain other metal except for silver and palladium. Examples of the other metal include gold, platinum, tin, gallium, aluminum, iridium, rhodium, nickel and iron.

The metal layer 24 has a film thickness of preferably from 5 to 10 nm and more preferably from 6 to 8 nm. When the film thickness of the metal layer 24 is set at 10 nm or less, it is possible to obtain a low reflectance in a wide wavelength region of from 450 nm to 700 nm. When the film thickness is set at 5 nm or more, it is possible to obtain a flatter spectral reflectance.

### Low Refractive Index Layer

The low refractive index layer 28 is formed of a layer having a refractive index of from 1.3 to 1.6.

Examples of the material forming the low refractive index layer 28 include silica (which has a refractive index of 1.46), magnesium fluoride (which has a refractive index of 1.38) and potassium fluoride (which has a refractive index of from 1.3 to 1.4).

The low refractive index layer 28 is preferably formed of a layer containing silica (hereinbelow, referred to as the silica layer) because of being excellent in chemical stability and having a high mechanical strength. The content of the silicon atoms or the oxygen atoms in the silica layer will be represented as the content of the silicon atoms or the oxygen atoms that has been measured by an ESCA method or a Rutherford backscattering method.

The content of the silicon atoms is preferably from 30 to 60 mass% and more preferably from 40 to 50 mass% relative to the total amount of the silica layer (100 mass%). The content of the oxygen atoms is preferably from 40 to 70 mass% and more preferably from 50 to 60 mass% relative to the total amount of the silica layer (100 mass%). When each of the content of the silicon atoms and the content of the oxygen atoms is in one of these corresponding ranges, it is possible to obtain a high transmittance.

The silica layer may contain an oxide of other metal to an extent that prevents the required physical property from being adversely affected. Examples of the other metal include gallium, indium, aluminum, magnesium and tin.

The silica layer may contain atoms etc. deriving from the gas used for deposition of the silica layer. Examples of the gas used for deposition of the silica layer include argon, nitride, helium and neon. The content of the atoms deriving from the gas is preferably 2 mass% or less and more preferably 1 mass% or less relative to the total amount of the silica layer (100 mass%).

The low refractive index layer 28 has a film thickness of preferably from 50 to 70 nm and more preferably from 55 to 65 nm. When the low refractive index layer 28 has a film thickness of 50 nm or more, it is possible to obtain a low reflectance in a long wavelength region (having a length of 600 nm or more). When the low refractive index layer has a film thickness of 70 nm or less, it is possible to obtain a low reflectance in a short wavelength side (having a length of 500 nm or less).

When each of the layers is formed so as to have a certain optical film thickness (refractive-index × physical-thickness), the antireflector 1 is obtained having its targeted optical properties (transmittance and reflectance).

Examples of the method for forming each of the layers include a physical vapor deposition, such as a vacuum deposition method, a reactive deposition method, an ion beam assist method, a sputtering method and an ion plating method, and a chemical vapor deposition method, such as a plasma CVD method. Among them, a sputtering method is particularly preferred since it is easy to obtain a uniform film thickness in a large area.

### Other Layers

The antireflection film 20 may have a stain-proof film disposed thereon in order to protect the antireflection film 20 and to have a high stain-proof performance.

A preferred example of the stain-proof film is a grease-repellent film containing, e.g. perfluoro silane or fluorocarbon. Examples of the method for disposing the stain-proof film include a vapor deposition method and a coating and drying method.

The stain-proof film has a film thickness of preferably 40 nm or less and more preferably from 5 to 20 nm.

The substrate 10 and the antireflection film 20 may have a hard coating film disposed therebetween in order to provide the antireflector 1 with a desired hardness.

The hard coating film is preferably formed of a transparent film having the same refractive index as the substrate 10 or a refractive index within a range of ±0.1 with respect to the refractive index of the substrate 10. Examples of the material forming the hard coating film include an ultraviolet-curable acrylic resin or silicone resin. Examples of the method for disposing the hard coating film include known coating methods, such as a bar-coating method, a doctor blade method, a reverse-roll coating method and a gravure-roll coating method.

The hard coating film has a film thickness of preferably 10 µm or less.

The metal layer 24 and the second high refractive index layer 26 may have a barrier layer disposed therebetween in order to prevent the metal layer 24 from being oxidized and improve the adhesion between the metal layer 24 and the second high refractive index layer 26.

Examples of the barrier layer include a metal nitride, such as a nitride of metal or a silicon nitride, or a metal oxide. Examples of the method for disposing the barrier layer include a vapor deposition method, a sputtering method and a CVD method.

The barrier layer has a film thickness of preferably 5 nm or less.

The antireflector according to the present invention has a luminous reflectance of preferably 1.5 or less, more preferably 1.0 or less and further preferably 0.6 or less. When the luminous reflectance is set at 1.5 or below, it is possible to obtain a practical luminous reflectance when the anti reflector is applied to a display or the like. Although lower luminous reflectances are much better, the luminous reflectance normally has a lower limit of 0.2 in terms of stabilization in the luminance reflectance during production.

The antireflector according to the present invention has a luminous transmittance of preferably 70% or more, more preferably 75% or more and further preferably 80% or more. When the luminous reflectance is set at 70% or more, it is possible to obtain a practical luminous transmittance when the antireflector is applied to a display or the like. Although higher luminous transmittances are much better, the luminous transmittance has an upper limit of 90% in terms of balance to the anti-fingerprint property.

The antireflector according to the present invention is suitable for antireflection in a display device, an optical element, a window or the like. Specifically, the antireflector according to the present invention may be provided by disposing an antireflection film on a substrate, which is formed of glass, plastics or the like forming the display screen of a display device, a window of a building, an automobile etc., a display showcase or the like. The anti reflector according to the present invention may be affixed to a surface formed of glass, plastics or another material, which is a part of the screen of a display panel, a window of a building, an automobile or the like, a display showcase or the like.

### Display Device

The display device according to the present invention includes a display panel for displaying an image and the anti reflector disposed on the observer's side of the display panel.

Examples of the display device include a plasma display (PD), a liquid crystal display device (LCD), an electroluminescence display (ELD), a cathode-ray tube display device (CRT) or a field emission display (FED).

The screen of a display panel is normally formed of glass, plastics or the like. In the display device according to the present invention, the anti reflector according to the present invention may be affixed directly to the screen by an adhesive or the like or may be disposed so as to be apart from the display panel by a gap.

The anti reflector according to the present invention may be affixed directly to the observer's side or the display side of a front plate, which is formed of glass, plastics, or the like and is disposed on the observer's side of the display panel. The anti reflector according to the present invention may be disposed on the observer's side or the display side of the front plate so as to be apart from the front plate by a gap.

The above-mentioned anti reflector according to the present invention has a simple layer structure and has a high visible light transmittance and a low visible light reflectance since the antireflection film disposed on the substrate has the first high refractive index layer, the metal layer, the second high refractive index layer and the low refractive index layer disposed therein sequentially from the substrate side. The anti reflector has an excellent anti-fingerprint property since each of the first high refractive index layer and the second high refractive index layer contains at least one member selected from the group consisting from tin, gallium and cerium in the form of an oxide and indium in the form an oxide, and since the metal layer contains silver and palladium, having silver content of from 80 to 97 mass% relative to the total amount of the metal layer (100 mass%) and having a palladium content of from 3 to 20 mass% relative to the total amount of the metal layer (100 mass%).

The above-mentioned display device according to the present invention has an excellent viewability since the anti reflector, which has a high visible light transmittance and a low visible high reflectance and has an excellent anti-fingerprint property, is disposed on the observer's side of the display panel.

### EXAMPLES

Although the present invention will be described in reference to examples in more detail, the present invention should not be construed as being limited to the examples.

### Contents of Metal Atoms in High Refractive Index Layer

The contents of the atoms forming each metal in the high refractive index were measured by an electron probe microanalyzer, an ESCA method (X-ray photoelectron spectroscopy) or a Rutherford back scattering method.

The measurements by the ESCA method were made by means of an instrument called "ESCA5500" manufactured by ULVAC-PHI INCORPORATED under the following conditions.
X-ray source: monochromatic Al
X-ray: Kα ray
Setting angle of detector: 45 degrees to sample surface

The measurements by the Rutherford back scattering method ESCA were made by means of an instrument called "Pelletron accelerator, 3UH" manufactured by National Electrostatics Corporation under the following conditions.
Beam energy: 2,300 keV
Ion species: He⁺
Scattering angles: 170 degrees and 100 degrees
Beam incident angle: 7 degrees to normal line of sample surface
Sample current: 30 nA
Beam irradiance level: 40 µC

The measurements by the electron probe microanalyzer were made by means of an instrument called "X-ray microanalyzer JXA-8800RL" manufactured by JEOL Ltd. under the following conditions.
Accelerating voltage: 7.0 kV
Irradiation current: 0.01 pA
Analysis method: Quantitative analysis
Analysis range: 100 µm in diameter
Content of Si Atoms in Each Low Refractive Index Layer

The content of the Si atoms in the low refractive index layer was measured by the above-mentioned electron probe microanalyzer, ESCA method or Rutherford back scattering method.

### Content of Metal

The content of metal atoms in the metal layer was measured by the above-mentioned electron probe microanalyzer, ESCA method or Rutherford back scattering method.

### Luminous Reflectance

The luminous reflectance (stimulus value Y prescribed in Japanese Industrial Standard Z 8701) of each reflector 1 was found based on the reflectance that was obtained by measuring the reflectance of each reflector from the side with the antireflection film 20 by means of a spectrophotometer (called "UV-3150" manufactured by Shimadzu Corporation).

### Luminous Transmittance

The transmittance (stimulus value Y prescribed in Japanese Industrial Standard Z 8701) of each reflector 1 was found based on the transmittance that was obtained by measuring the transmittance of each reflector from a side with the antireflection film 20 by means of the spectrophotometer (called "UV-3150" manufactured by Shimadzu Corporation).

### Anti-Fingerprint Property

Samples, each of which had the first high refractive index layer 22, the metal layer 24 and the second high refractive index layer 26 disposed on the substrate 10 without provision of a low refractive index layer, were prepared.

A fingerprint was made on the second high refractive index layer 26 of each of the samples, and the fingerprint was left for 120 hours in an atmosphere having a temperature of 40°C and a humidity of 90%, followed by wiping out the fingerprint and observing the appearance of the second high refractive index layer.

The samples wherein no change was found on the portions with the fingerprint made thereon are represented by symbol of "○", the samples wherein a change was found on the portions with the fingerprint made thereon are represented by symbol of "×", and the samples wherein although a slight change was found on the portions with the fingerprint made thereon, no practical problem was caused are represented by symbol of "△".

### Example 1 (Comparative Example)

On the surface of a film as the substrate 10, which had a thickness of 100 µm and was made of polyethylene terephthalate (PET), pulse sputtering was carried out under a pressure of 0.43 Pa, at a frequency of 50 kHz, at an electric power density of 2.5 W/cm² and at a reverse pulse duration of 2 µsec to deposit a first high refractive index layer 22 with a film thickness of 32 nm and a refractive index of 2.12 by using a mixed target of a tin oxide and an indium oxide (tin-oxide : indium-oxide = 40:60 (mass ratio) (available in the product name of "40 wt% ITO target" manufactured by Sumitomo Metal Mining Co., Ltd.) while a mixed gas of 95 vol% of an argon gas and 5 vol% of an oxygen gas was introduced. The measurement by the electron probe microanalyzer (EPMA: Electron Probe Micro Analysis) revealed that indium occupied 21.5 atomic%, tin occupied 12.8 atomic% and oxygen occupied 65.7 atomic% based on all atoms (100 atomic%) in the first high refractive index layer 22. When the composition ratio of the first high refractive index layer 22 was converted to mass%, indium occupied 49.0 mass%, tin occupied 30.1 mass%, and oxygen occupied 20.9 mass%.

Pulse sputtering was carried out under a pressure of 0.44 Pa, at a frequency of 50 kHz, at an electric power density of 2.5 W/cm² and at a reverse pulse duration of 10 µsec to deposit a metal layer 24 with a film thickness of 7 µm on the first high refractive index layer 22 by using a pure-silver target (available in the product name of "Ag target" manufactured by Tanaka Kikinzoku Kogyo K.K.) while an argon gas was introduced. The measurement by the Rutherford back scattering method revealed that silver occupied 99.9 mass% or more in the metal layer 24 (100 mass%).

Pulse sputtering was carried out under a pressure of 0.43 Pa, at a frequency of 50 kHz, at an electric power density of 2.5 W/cm² and at a reverse pulse duration of 2 µsec to deposit a second high refractive index layer 26 with a film thickness of 16 nm and a refractive index of 2.12 by using a mixed target of an indium oxide and an tin oxide (indium-oxide: tin-oxide = 60:40 (mass ratio)) (available in the product name of "40 wt% ITO target" manufactured by Sumitomo Metal Mining Co., Ltd.) while a mixed gas of 95 vol% of an argon gas and a 5 vol% of an oxygen gas was introduced. The measurement by the electron probe microanalyzer (EPMA: Electron Probe Micro Analysis) revealed that the composition of the second high refractive index layer 26 was the same as the first high refractive index layer 22.

Pulse sputtering was carried out under a pressure of 0.21 Pa, at a frequency of 50 kHz, at an electric power density of 3.7 W/cm² and at a reverse pulse duration of 5 µsec to deposit a low refractive index layer 28 with a film thickness of 60 nm and a refractive index of 1.46 by using a silicon target with boron doped therein (available in the product name of "B-doped silicon target" manufactured by Vacuum Metallurgical Co., Ltd.) while a mixed gas of 60 vol% of an argon gas and 40 vol% of an oxygen gas was introduced. The measurement by the Rutherford back scattering method revealed that silicon occupied 31.5 atomic%, oxygen occupied 68.2 atomic% and argon occupied 0.3 atomic% based on all atoms (100 atomic%) in the low refractive index layer 28. When the composition ratio of the low refractive index layer 28 was converted to mass%, silicon occupied 44.4 mass%, oxygen occupied 55.0 mass% and argon occupied 0.6 mass%.

The luminous reflectance and the luminous transmittance of the antireflector 1 fabricated as described above were measured. Another sample, which had the first refractive index layer 22, the metal layer 24 and the second high refractive index layer 26 disposed on a similar substrate without provision of the low refractive index layer, was prepared. The anti-fingerprint property of this sample was evaluated. The results are shown in Table 1.

### Example 2 (Comparative Example)

An antireflector 1 was fabricated in the same conditions as Example 1 except that a silver-alloy target with 1.0 mass% of palladium doped therein (available in the product name of "AgPd 1 wt% target" manufactured by Tanaka Kikinzoku Kogyo K.K.) was used as the target used for depositing the metal layer 24 of the antireflector. The measurement by the Rutherford back scattering method revealed that silver occupied 99 mass%, and palladium occupied 1 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 10 without provision of a low refractive index layer. The anti-fingerprint property of this sample was evaluated. The results are shown in Table 1.

### Example 3 (Comparative Example)

An antireflector 1 was fabricated in the same conditions as Example 1 except that a silver-alloy target with 2.0 mass% of palladium doped therein (available in the product name of "AgPd 2 wt% target" manufactured by Tanaka Kikinzoku Kogyo K.K.) was used as the target used for depositing the metal layer 24 of the antireflector. The measurement by the Rutherford back scattering method revealed that silver occupied 98 mass% and palladium occupied 2 mass% in the metal layer 24 (100 mass%).

The luminous reflectance and the luminous transmittance of the antireflector 1 was measured. Another sample, which had the first high refractive index layer 22, the metal layer 24 and the second high refractive index layer 26 deposited on a similar substrate without provision of a low refractive index layer, was fabricated. The anti-fingerprint property of this sample was evaluated. The results are shown in Table 1.

### Example 4

An antireflector 1 was fabricated in the same conditions as Example 1 except that a silver-alloy target with 3.5 mass% of palladium doped therein (available in the product name of "AgPd 3.5 wt% target" manufactured by Tanaka Kikinzoku Kogyo K.K.) was used as the target used for depositing the metal layer 24 of the antireflector, and that the first high refractive -index layer 22, the metal layer 24 and the second high refractive index layer 26 of the antireflector had film thicknesses set at 28 nm, 8.5 nm and 15 nm, respectively. The measurement by the Rutherford back scattering method revealed that silver occupied 96.5 mass% and palladium occupied 3.5 mass% in the metal layer 24 (100 mass%).

The luminous reflectance and the luminous transmittance of the antireflector 1 were measured. Another sample, which had the first high refractive index layer 24, the metal layer 24 and the second high refractive index layer 26 deposited on a similar substrate 10 without provision of a low refractive index layer, was fabricated. The anti-fingerprint property of this sample was evaluated. The results are shown in Table 1.

### Example 5

An antireflector 1 was fabricated in the same conditions as Example 4 except that a silver-alloy target with 5.0 mass% of palladium doped therein (available in the product name of "AgPd 5 wt% target" manufactured by Tanaka Kikinzoku Kogyo K.K.) was used as the target used for depositing the metal layer 24 of the antireflector. The measurement by the Rutherford back scattering method revealed that silver occupied 95 mass%, and palladium occupied 5 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 6

An antireflector 1 was fabricated in the same conditions as Example 1 except that a silver-alloy target with 10.0 mass% of palladium doped therein (available in the product name of "AgPd 10 wt% target" manufactured by Tanaka Kikinzoku Kogyo K.K.) was used as the target used for depositing the metal layer 24 of the antireflector, and that the first high refractive index layer 22, the metal layer 24 and the second refractive index layer 26 of the antireflector had film thicknesses set at 22 nm, 7.5 nm and 17 nm, respectively. The measurement by the Rutherford back scattering method revealed that silver occupied 90 mass%, and palladium occupied 10 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 7

An antireflector 1 was fabricated in the same conditions as Example 1 except that a silver-alloy target with 5.0 mass% of palladium and 5.0 mass% of platinum doped therein (available in the product name of "AgPd 5 wt% Pt 5 wt% target" manufactured by Tanaka Kikinzoku Kogyo K.K.) was used as the target used for depositing the metal layer 24 of the antireflector, and that the first high refractive index layer 22, the metal layer 24 and the second refractive index layer 26 of the antireflector had film thicknesses set at 29 nm, 8 nm and 22 nm, respectively. The measurement by the Rutherford back scattering method revealed that silver occupied 90 mass%, palladium occupied 5 mass%, and platinum occupied 5 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 8 (Comparative Example)

An antireflector 1 was fabricated in the same conditions as Example 1 except that a silver-alloy target with 10.0 mass% of tin doped therein (available in the product name of "AgSn 10 wt% target" manufactured by Tanaka Kikinzoku Kogyo K.K.) was used as the target used for depositing the metal layer 24 of the antireflector, and that the first high refractive index layer 22, the metal layer 24 and the second refractive index layer 26 of the antireflector had film thicknesses set at 29 nm, 6.4 nm and 19 nm, respectively. The measurement by the Rutherford back scattering method revealed that silver occupied 90 mass%, and tin occupied 10 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 9

An antireflector 1 was fabricated in the same conditions as Example 1 except that a silver-alloy target with 3.0 mass% of palladium and 2.0 mass% of gold doped therein (available in the product name of "AgAu 2 wt% Pd 3 wt% target" manufactured by Tanaka Kikinzoku Kogyo K.K.) was used as the target used for depositing the metal layer 24 of the antireflector, and that the first high refractive index layer 22, the metal layer 24 and the second refractive index layer 26 of the antireflector had film thicknesses set at 31 nm, 9.5 nm and 19 nm, respectively. The measurement by the Rutherford back scattering method revealed that silver occupied 95 mass%, palladium occupied 3 mass%, and gold occupied 2 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 10 (Comparative Example)

An antireflector 1 was fabricated in the same conditions as Example 1 except that a silver-alloy target with 2.0 mass% of palladium and 3.0 mass% of gold doped therein (available in the product name of "AgAu 3 wt% Pd 2 wt% target" manufactured by Tanaka Kikinzoku Kogyo K.K.) was used as the target used for depositing the metal layer 24 of the antireflector, and that the first high refractive index layer 22, the metal layer 24 and the second refractive index layer 26 of the antireflector had film thicknesses set at 29 nm, 9.5 nm and 19 nm, respectively. The measurement by the Rutherford back scattering method revealed that silver occupied 95 mass%, palladium occupied 2 mass%, and gold occupied 3 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 11

An antireflector 1 was fabricated in the same conditions as Example 1 except that a silver-alloy target with 3.0 mass% of palladium, 2.0 mass% of gold and 1.0 mass% of copper doped therein (available in the product name of "AgAu 2 wt% Pd 3 wt% Cu 1 wt% target" manufactured by Tanaka Kikinzoku Kogyo K.K.) was used as the target used for depositing the metal layer 24 of the antireflector, and that the first high refractive index layer 22, the metal layer 24 and the second refractive index layer 26 of the antireflector had film thicknesses set at 29 nm, 8.5 nm and 19 nm, respectively. The measurement by the Rutherford back scattering method revealed that silver occupied 94 mass%, palladium occupied 3 mass%, gold occupied 2 mass% and copper occupied 1 mass% in the metal layer 24 (100 mass%).

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 1.

### Example 12

An antireflector 1 was fabricated in the same conditions as Example 5 except that a mixed target of an indium oxide and a tin oxide (indium-oxide : tin-oxide = 90:10 (mass ratio) (available in the product name of "10 ITO target" manufactured by Sumitomo Metal Mining Co., Ltd.) was used as the target used for depositing the first high refractive index layer 22 and the second high refractive index layer 26 of the antireflector film. Each of the first high refractive index layer 22 and the second high refractive index layer 26 had a refractive index of 1.96. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 13

An antireflector 1 was fabricated in the same conditions as Example 5 except that a mixed target of an indium oxide and a tin oxide (indium-oxide : tin-oxide = 80:20 (mass ratio) (available in the product name of "20 ITO target" manufactured by Sumitomo Metal Mining Co., Ltd.) was used as the target used for depositing the first high refractive index layer 22 and the second high refractive index layer 26 of the antireflector. Each of the first high refractive index layer 22 and the second high refractive index layer 26 had a refractive index of 2.01. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 14

An antireflector 1 was fabricated in the same conditions as Example 5 except that a mixed target of an indium oxide and a tin oxide (indium-oxide : tin-oxide = 70:30 (mass ratio) (available in the product name of "30 ITO target" manufactured by Sumitomo Metal Mining Co., Ltd.) was used as the target used for depositing the first high refractive index layer 22 and the second high refractive index layer 26 of the antireflector. Each of the first high refractive index layer 22 and the second high refractive index layer 26 had a refractive index of 2.07. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 15

An antireflector 1 was fabricated in the same conditions as Example 5 except that a mixed target of an indium oxide and a tin oxide (indium-oxide : tin-oxide = 50:50 (mass ratio) (available in the product name of "50 ITO target" manufactured by Sumitomo Metal Mining Co., Ltd.) was used as the target used for depositing the first high refractive index layer 22 and the second high refractive index layer 26 of the antireflector, and that the second high refractive index layer had a film thickness set at 16 nm. Each of the first high refractive index layer 22 and the second high refractive index layer 26 had a refractive index of 2.17. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 16

An antireflector 1 was fabricated in the same conditions as Example 5 except that a mixed target of an indium oxide, a tin oxide and an gallium oxide (indium-oxide : tin-oxide : gallium-oxide = 5:91:4 (mass ratio) (available in the product name of "GIT target" manufactured by AGC Ceramics Co., Ltd.) was used as the target used for depositing the first high refractive index layer 22 and the second high refractive index layer 26 of the antireflector, and that the metal layer 24 of the antireflector had a film thickness set at 8 nm. Each of the first high refractive index layer 22 and the second high refractive index layer 26 had a refractive index of 2.07. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 17

An antireflector 1 was fabricated in the same conditions as Example 16 except that a mixed target of an indium oxide, a tin oxide and an gallium oxide (indium-oxide : tin-oxide : gallium-oxide = 10:87:3 (mass ratio)(a prototype manufactured by AGC Ceramics Co., Ltd.) was used as the target used for depositing the first high refractive index layer 22 and the second high refractive index layer 26 of the antireflector. Each of the first high refractive index layer 22 and the second high refractive index layer 26 had a refractive index of 2.0. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 18

An antireflector 1 was fabricated in the same conditions as Example 16 except that a mixed target of an indium oxide, a tin oxide and an gallium oxide (indium-oxide : tin-oxide : gallium-oxide = 5:93:2 (mass ratio)(a prototype manufactured by AGC Ceramics Co., Ltd.) was used as the target used for depositing the first high refractive index layer 22 and the second high refractive index layer 26 of the antireflector. Each of the first high refractive index layer 22 and the second high refractive index layer 26 had a refractive index of 2.0. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 19

An antireflector 1 was fabricated in the same conditions as Example 16 except that a mixed target of an indium oxide, a tin oxide, an gallium oxide and a titanium oxide (indium-oxide : tin-oxide : gallium-oxide : titanium-oxide = 5:90:4:1 (mass ratio)(a prototype manufactured by AGC Ceramics Co., Ltd.) was used as the target used for depositing the first high refractive index layer 22 and the second high refractive index layer 26 of the antireflector. Each of the first high refractive index layer 22 and the second high refractive index layer 26 had a refractive index of 2.0. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 20

An antireflector 1 was fabricated in the same conditions as Example 16 except that a mixed target of an indium oxide, a tin oxide and an gallium oxide (indium-oxide : tin-oxide : gallium-oxide = 2.5:96.5:2 (mass ratio)(a prototype manufactured by AGC Ceramics Co., Ltd.) was used as the target used for depositing the first high refractive index layer 22 and the second high refractive index layer 26 of the antireflector. Each of the first high refractive index layer 22 and the second high refractive index layer 26 had a refractive index of 2.0. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 21

An antireflector 1 was fabricated in the same conditions as Example 5 except that a mixed target of an indium oxide and a cerium oxide (indium-oxide : cerium-oxide = 80:20 (mass ratio) (available in the product name of "20 ICO" manufactured by Sumitomo Metal Mining Co., Ltd.) was used as the target used for depositing the first high refractive index layer 22 and the second high refractive index layer 26 of the antireflector, and that the first high refractive index layer 22, the metal layer 24 and the second high refractive index layer 26 had film thicknesses set at 25 nm, 10 nm and 16 nm, respectively. Each of the first high refractive index layer 22 and the second high refractive index layer 26 had a refractive index of 2.27. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 22

An antireflector 1 was fabricated in the same conditions as Example 5 except that a mixed target of an indium oxide and a gallium oxide (indium-oxide : gallium-oxide = 50:50 (mass ratio) (available in the product name of "GIO" manufactured by Sumitomo Metal Mining Co., Ltd.) was used as the target used for depositing the first high refractive index layer 22 and the second high refractive index layer 26 of the antireflector, and that the first high refractive index layer 22, the metal layer 24 and the second high refractive index layer 26 had film thicknesses set at 32 nm, 7 nm and 14 nm, respectively. Each of the first high refractive index layer 22 and the second high refractive index layer 26 had a refractive index of 2.00. The composition of each of the first high refractive index layer 22 and the second high refractive index layer 26, which was found based on the composition of the used target, is shown in Table 2.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 2.

### Example 23 (Comparative Example)

An antireflector 1 was fabricated in the same conditions as Example 5 except that a mixed target of a zinc oxide and an aluminum oxide (zinc-oxide : aluminum-oxide = 95:5 (mass ratio) (available in the product name of "5AZO target" manufactured by AGC Ceramics Co., Ltd.) was used as the target used for depositing the first high refractive index layer 22 and the second high refractive index layer 26 of the antireflector, and that the first high refractive index layer 22 and the metal layer 24 of the antireflector had film thicknesses set at 35 nm and 6 nm, respectively. Each of the first high refractive index layer 22 and the second high refractive index layer 26 had a refractive index of 1.97. The composition of each of the first high refractive index layer 22 and the second high refractive index layer 26, which was found based on the composition of the used target, is shown in Table 3.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 3.

### Example 24 (Comparative Example)

An antireflector 1 was fabricated in the same conditions as Example 23 except that a mixed target of a zinc oxide and an titanium oxide (zinc-oxide : titanium-oxide = 90:10 (mass ratio) (available in the product name of "10SZ0 target" manufactured by AGC Ceramics Co., Ltd.) was used as the target used for depositing the first high refractive index layer 22 and the second high refractive index layer 26 of the antireflector. Each of the first high refractive index layer 22 and the second high refractive index layer 26 had a refractive index of 2.02. The composition of each of the first high refractive index layer 22 and the second high refractive index layer 26, which was found based on the composition of the used target, is shown in Table 3.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 3.

### Example 25 (Comparative Example)

An antireflector 1 was fabricated in the same conditions as Example 23 except that a mixed target of a zinc oxide and an titanium oxide (zinc-oxide : titanium-oxide = 85:15 (mass ratio) (available in the product name of "15SZO target" manufactured by AGC Ceramics Co., Ltd.) was used as the target used for depositing the first high refractive index layer 22 and the second high refractive index layer 26 of the antireflector. Each of the first high refractive index layer 22 and the second high refractive index layer 26 had a refractive index of 2.07. The composition of each of the first high refractive index layer 22 and the second high refractive index layer 26, which was found based on the composition of the used target, is shown in Table 3.

The luminous reflectance and the luminous transmittance of the antireflector 1 were measured. Another sample, which had the first high refractive index layer 22, the metal layer 24 and the second high refractive index layer 26 deposited on a similar substrate 1 without provision of a low refractive index layer, was fabricated. The anti-fingerprint property of this antireflector was evaluated. The results are shown in Table 3.

### Example 26 (Comparative Example)

An antireflector 1 is fabricated in the same conditions as Example 12 except that a silver-alloy target with 0.3 mass% of copper and 2.7 mass% of gold doped therein (available in the product name of "AgAu 2.7 wt% Cu 0.3 wt% target" manufactured by Tanaka Kikinzoku Kogyo K.K.) is used as the target used for depositing the metal layer 24 of the antireflector, and that the first high refractive index layer 22, the metal layer 24 and the second refractive index layer 26 of the antireflector have film thicknesses set at 27 nm, 9 nm and 20 nm, respectively. Each of the first high refractive index layer 22 and the second high refractive index layer 26 has a refractive index of 1.96. The composition of each of the first high refractive index layer 22 and the second high refractive index layer 26, which is found based on the composition of the used target, is shown in Table 4.

The luminous reflectance and the luminous transmittance of the antireflector 1 are measured. Another sample, which has the first high refractive index layer 22, the metal layer 24 and the second high refractive index layer 26 deposited on a similar substrate 1 without provision of a low refractive index layer, is fabricated. The anti-fingerprint property of this antireflector is evaluated. The results are shown in Table 4.

### Example 27 (Comparative Example)

An antireflector 1 is fabricated in the same conditions as Example 21 except that a silver-alloy target with 0.3 mass% of copper and 2.7 mass% of gold doped therein (available in the product name of "AgAu 2.7 wt% Cu 0.3 wt% target" manufactured by Tanaka Kikinzoku Kogyo K.K.) is used as the target used for depositing the metal layer 24 of the antireflector, that a mixed target of an indium oxide and a cerium oxide (indium-oxide : cerium-oxide = 90:10 (mass ratio) (available in the product name of "10 ICO" manufactured by Sumitomo Metal Mining Co., Ltd.) was used as the target used for depositing the first high refractive index layer 22 and the second high refractive index layer 26 of the antireflector, and that the first high refractive index layer 22, the metal layer 24 and the second refractive index layer 26 have film thicknesses set at 27 nm, 9 nm and 20 nm, respectively. Each of the first high refractive index layer 22 and the second high refractive index layer 26 has a refractive index of 1.96. The composition of each of the first high refractive index layer 22 and the second high refractive index layer 26, which is found based on the composition of the used target, is shown in Table 4.

The luminous reflectance and the luminous transmittance of the antireflector 1 are measured. Another sample, which has the first high refractive index layer 22, the metal layer 24 and the second high refractive index layer 26 deposited on a similar substrate 1 without provision of a low refractive index layer, is fabricated. The anti-fingerprint property of this antireflector is evaluated. The results are shown in Table 4.

**Table 1**

| Example | Metal layer (mass%) | | | | | | Luminous reflectance (%) | Luminous transmittance (%) | Anti-fingerprint property |
|---|---|---|---|---|---|---|---|---|---|
| | Ag | Pd | Au | Pt | Cu | Sn | | | |
| 1(Comp.Ex.) | 99.9 | - | - | - | - | - | 0.51 | 86.8 | × |
| 2(Comp.Ex.) | 99 | 1 | - | - | - | - | 0.51 | 85.0 | × |
| 3(Comp.Ex.) | 98 | 2 | - | - | - | - | 0.54 | 86.0 | × |
| 4 | 96.5 | 3.5 | - | - | - | - | 0.44 | 83.5 | △ |
| 5 | 95 | 5 | - | - | - | - | 0.32 | 81.0 | ○ |
| 6 | 90 | 10 | - | - | - | - | 0.46 | 75.2 | ○ |
| 7 | 90 | 5 | - | 5 | - | - | 0.43 | 78.0 | ○ |
| 8(Comp.Ex.) | 90 | - | - | - | - | 10 | 0.44 | 82.4 | × |
| 9 | 95 | 3 | 2 | - | - | - | 0.42 | 84.1 | ○ |
| 10(Comp.Ex.) | 95 | 2 | 3 | - | - | - | 0.52 | 85.8 | △ |
| 11 | 94 | 3 | 2 | - | 1 | - | 0.49 | 84.2 | △ |

| | | | | | | | | | |
|---|---|---|---|---|---|---|---|---|---|
| High refractive index layer = In: 49.0 mass%, Sn: 30.1 mass% | | | | | | | | | |

**Table 2**

| Example | High refractive index layer (mass%) | | | | | Luminous reflectance (%) | Luminous transmittance (%) | Anti-fingerprint property |
|---|---|---|---|---|---|---|---|---|
| | In | Sn | Ga | Ti | Ce | | | |
| 12 | 74.4 | 7.9 | - | - | - | 0.43 | 80.6 | △ |
| 13 | 66.2 | 15.8 | - | - | - | 0.39 | 80.6 | △ |
| 14 | 57.9 | 23.6 | - | - | - | 0.45 | 80.4 | ○ |
| 15 | 41.4 | 39.4 | - | - | - | 0.50 | 80.5 | ○ |
| 16 | 4.1 | 71.7 | 3.0 | - | - | 0.34 | 81.9 | △ |
| 17 | 8.3 | 68.5 | 2.2 | - | - | 0.42 | 81.5 | △ |
| 18 | 4.1 | 73.3 1.5 | 1.5 | - | - | 0.45 | 81.3 | △ |
| 19 | 4.1 | 70.9 | 3.0 | 0.6 | - | 0.48 | 81.0 | △ |
| 20 | 2.1 | 76.0 | 1.5 | - | - | 0.42 | 81.3 | △ |
| 21 | 66.2 | - | - | - | 16.3 | 0.45 | 82.0 | ○ |
| 22 | 41.4 | - | 37.2 | - | - | 0.40 | 82.2 | ○ |

| | | | | | | | | |
|---|---|---|---|---|---|---|---|---|
| Metal layer = Ag: 95 mass%, Pd: 5 mass% | | | | | | | | |

**Table 3**

| Example | High refractive index layer (mass%) | | | Luminous reflectance (%) | Luminous transmittance (%) | Anti-fingerprint property |
|---|---|---|---|---|---|---|
| | Zn | Al | Ti | | | |
| 23(Comp.Ex.) | 76.3 | 2.6 | - | 0.42 | 81.5 | × |
| 24(Comp.Ex.) | 72.3 | - | 6.0 | 0.45 | 82.0 | × |
| 25(Comp.Ex.) | 68.3 | - | 9.0 | 0.43 | 82.1 | × |

| | | | | | | |
|---|---|---|---|---|---|---|
| Metal layer = Ag: 95 mass%, Pd: 5 mass% | | | | | | |

**Table 4**

| Example | Metal layer (mass%) | | | High refractive index layer (mass%) | | | Luminous reflectance (%) | Luminous transmittance (%) | Anti-fingerprint property |
|---|---|---|---|---|---|---|---|---|---|
| | Ag | Au | Cu | In | Sn | Ce | | | |
| 26(Comp.Ex.) | 97 | 2.7 | 0.3 | 74.4 | 7.9 | - | 0.45 | 85 | × |
| 27(Comp.Ex.) | 97 | 2.7 | 0.3 | 74.4 | - | 8.1 | 0.45 | 85 | × |

The antireflector in Example 5 had a low luminous reflectance, a high luminous transmittance and an excellent anti-fingerprint property. The antireflector had a reflectance of 1 % or less in a wavelength range of from 400 to 700 nm as shown in Fig. 2. The antireflector had a transmittance of 80% or more in a wavelength range of from 480 to 780 nm as shown in Fig. 3.

The antireflector in Example 6 had a low luminous reflectance and an excellent anti-fingerprint property. Although the antireflector had a slightly low luminous transmittance, no practical problem was found.

The antireflector in Example 4 had a low luminous reflectance and a high luminous transmittance. Although the antireflector was inferior in anti-fingerprint property, no practical problem was found.

Although each of the antireflectors in Examples 1 to 3 had a low luminous reflectance and a high luminous transmittance, each of the antireflectors was inferior in anti-fingerprint property.

In Example 5 and Examples 12 to 15, a silver alloy containing 5 mass% of palladium was employed as the material forming each of the metal layers, and five different ITO layers, which had a content of tin atoms ranging from 7.9 to 39.4 mass%, were applied to the first high refractive index layers and the second high refractive index layers. It was revealed that the antireflectors in these examples, which had a content of tin atoms in this range, had significant advantages in optical property and anti-fingerprint property.

In Example 21, a silver alloy containing 5 mass% of palladium was also employed, and ICO layers, which had a content of 16.3 mass% (6.5 atomic%) as cerium atoms, were applied to the first high refractive index layer and the second high refractive index layer. It was revealed that the antireflector in this example had an excellent optical property and an excellent anti-fingerprint property.

Since the function of cerium atoms in the ICO layer and the function of tin atoms in the ITO layer are considered as being the same as each other, it is estimated that the ICO layer in Example 21, which contained cerium atoms in the same amount as the content of tin atoms (on the basis of the number of atoms) in the above-mentioned Example 5 and Examples 12 to 15, also not only exhibits an excellent optical property but also offers the advantage of an excellent anti-fingerprint property.

Each of Examples 23 to 27 was inferior in anti-fingerprint property since a silver alloy containing no palladium was employed as the material for forming the metal layer.

### INDUSTRIAL APPLICABILITY

The antireflector according to the present invention is effective as an antireflector for improving the viewability of a display device because of having a simple layer structure, a high visible light transmittance, a low visible light reflectance and an excellent anti-fingerprint property.

The entire disclosure of Japanese Patent Application No. 2006-350752 filed on December 27, 2006 including specification, claims, drawings and summary is incorporated herein by reference in its entirety.

## Claims

1. An antireflector comprising a substrate and an antireflection film;
the antireflection film having a first high refractive index layer, a metal layer, a second high refractive index layer and a low refractive index layer disposed therein sequentially from a substrate side;
the first high refractive index layer containing at least one member selected from a group consisting of tin, gallium and cerium in the form of an oxide, and indium in the form of an oxide, and having a refractive index of from 1.8 to 2.5;
the metal layer containing silver and palladium, having a silver content of from 80 to 97 mass% relative to the total amount of the metal layer (100 mass%) and having a palladium content of from 3 to 20 mass% relative to the total amount of the metal layer (100 mass%);
the second high refractive index layer containing at least one member selected from a group consisting of tin, gallium and cerium in the form of an oxide and indium in the form of an oxide and having a refractive index of from 1.8 to 2.5; and
the low refractive index layer having a refractive index of from 1.3 to 1.6.

2. The antireflector according to Claim 1, wherein the metal layer has a thickness of from 5 to 10 nm.

3. The antireflector according to Claim 1 or 2, wherein the first high refractive index layer contains tin and indium in the form of oxides, and the first high refractive index layer has a content of tin atoms ranging from 7 to 48 mass%.

4. The antireflector according to Claim 3, wherein the first high refractive index layer has a thickness of from 20 to 40 nm.

5. The antireflector according to Claim 1 or 2, wherein the first high refractive index layer contains cerium and indium in the form of oxides, and the first high refractive index layer has a content of cerium atoms ranging from 8 to 52.1 mass%.

6. The antireflector according to Claim 5, wherein the first high refractive index layer has a thickness of from 15 to 35 nm.

7. The antireflector according to Claim 1 or 2, wherein the first high refractive index layer contains gallium, tin and indium in the form of oxides, and the first high refractive index layer has a content of tin atoms ranging from 63 to 77 mass% and a content of gallium atoms ranging from 1 to 4 mass%.

8. The antireflector according to Claim 7, wherein the first high refractive index layer has a thickness of from 20 to 40 nm.

9. The antireflector according to any one of Claims 1 or 8, wherein the second high refractive index layer contains tin and indium in the form of oxides, and the second high refractive index layer has a content of tin atoms ranging from 7 to 48 mass%.

10. The antireflector according to Claim 9, wherein the second high refractive index layer has a thickness of from 12 to 30 nm.

11. The antireflector according to any one of Claims 1 or 8, wherein the second high refractive index layer contains cerium and indium in the form of oxides, and the second high refractive index layer has a content of cerium atoms ranging from 8 to 52.1 mass%.

12. The antireflector according to Claim 11, wherein the second high refractive index layer has a thickness of from 8 to 25 nm.

13. The antireflector according to any one of Claims 1 to 8, wherein the second high refractive index layer contains gallium, tin and indium in the form of oxides, and the second high refractive index layer has a content of tin atoms ranging from 63 to 77 mass% and a content of gallium atoms ranging from 1 to 4 mass%.

14. The antireflector according to Claim 13, wherein the second high refractive index layer has a thickness of from 12 to 30 nm.

15. The antireflector according to any one of Claims 1 to 14, wherein the first high refractive index layer and the second high refractive index layer are formed of layers having the same composition as each other.

16. The antireflector according to any one of Claims 1 to 15, wherein the low refractive index layer is formed of a layer containing silica, and the low refractive index layer has a content of silicon atoms ranging from 30 to 60 mass%.

17. A display device comprising:
a display panel for displaying an image; and
an antireflector disposed on an observer's side of the display panel, the antireflector defined in any one of Claims 1 to 16.
